(19) Europäisches Patentamt
European Patent Office
Office européen des brevets

(11) **EP 2 378 654 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
**H02M 7/48** [(2007.01)]

(21) Anmeldenummer: **11155679.1**

(22) Anmeldetag: **23.02.2011**

(54) **Wechselrichter-Steuerung**

Inverter control

Commande d'un onduleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2010 DE 102010009266**

(43) Veröffentlichungstag der Anmeldung:
**19.10.2011 Patentblatt 2011/42**

(73) Patentinhaber: **Kostal Industrie Elektrik GmbH 58513 Lüdenscheid (DE)**

(72) Erfinder: **Bartling, Ralf, Dr. 58730, Fröndenberg (DE)**

(74) Vertreter: **Kerkmann, Detlef Leopold Kostal GmbH & Co. KG An der Bellmerei 10 58513 Lüdenscheid (DE)**

(56) Entgegenhaltungen:
**EP-A1- 2 107 672**

**Beschreibung**

Die Erfindung betrifft einen Wechselrichter, der mindestens einen Gleichspannungseingang für mindestens eine Gleichspannungsquelle aufweist, und der eine dreiphasige Brückenschaltung aufweist, deren ausgangsseitige Phasenleiter mit einem dreiphasigen Wechselspannungsnetz verbindbar sind, wobei der Wechselrichter keine Verbindung zum Neutralleiter des Wechselspannungsnetzes herstellt, wobei mit den Phasenleitern jeweils ein Kondensator verbunden ist, und die Kondensatoren einen gemeinsamen Verknüpfungspunkt aufweisen.

Ein derartiger dreiphasiger Wechselrichter ist in der europäischen Patentanmeldung EP 2 107 672 A1 beschrieben. Dieses Dokument erläutert insbesondere, dass ein Wechselrichter ohne Anbindung an einen Neutralleiter mit einer geringeren Zwischenkreisspannung arbeiten kann, wodurch die Spannungsbelastung der Leistungshalbleiter verringert und deren Wirkungsgrad erhöht werden kann.

Solche Wechselrichter werden verwendet, um beispielsweise durch eine Photovoltaik- oder eine Windkraftanlage generierte elektrische Energie in das öffentliche Netz eines Energieversorgers einzuspeisen. Ein gattungsgemäßer Wechselrichter erzeugt eine dreiphasige Wechselspannung, ohne eine Verbindung zum Neutralleiter (N-Leiter) des Netzes. Zur optimalen Steuerung des Wechselrichters ist es aber erforderlich, die Spannungen der drei Phasenleiter gegen das Potential des Neutralleiters zu bestimmen.

Der notwendigerweise vorhandene Schutzleiter (PE-Leiter, "protective earth") weist zwar grundsätzlich das gleiche Potential wie der Neutralleiter auf. Gegen den Schutzleiter dürfen aber aus Gründen der elektrischen Sicherheit keine Messinstanzen geschaltet werden, die galvanisch mit den Wechselrichterpotentialen verbunden sind.

Es stellte sich die Aufgabe, einen Wechselrichter, der keine direkte Verbindung zum Neutralleiter eines angeschlossenen dreiphasigen Spannungsnetzes aufweist, so auszugestalten, dass der Wechselrichter die Spannungen seiner Phasenleiter gegen das Potential des Neutralleiters erfassen kann.

Diese Aufgabe wird erfindungsgemäß dadurch gelöst, dass der Wechselrichter einen Mikrocontroller aufweist, der die Spannungen der Phasenleiter gegen ein internes Bezugspotential erfasst, dass der Mikrocontroller die Spannung am Verknüpfungspunkt der Kondensatoren gegen das interne Bezugspotential durch eine Spannungsmessung erfasst oder aus erfassten Spannungswerten berechnet, und dass der Mikrocontroller aus den erfassten Spannungen die Spannungen der Phasenleiter gegen das Potential des Neutralleiters berechnet.

Der Erfindung wird nachfolgend anhand der Zeichnung näher erläutert. Es zeigen:

Figur 1    eine Schaltskizze eines erfindungsgemäßen Wechselrichters,
Figur 2    Verläufe diverser Spannungen bei Anbindung des Wechselrichters an ein symmetrisches Wechselspannungsnetz,
Figur 3    zwei Ausführungen von Integratoren,
Figur 4    ein Bode-Diagramm zu den in der Figur 3 dargestellten Reglern,
Figur 5    Verläufe diverser Spannungen bei Anbindung des Wechselrichters an ein asymmetrisches Wechselspannungsnetz.

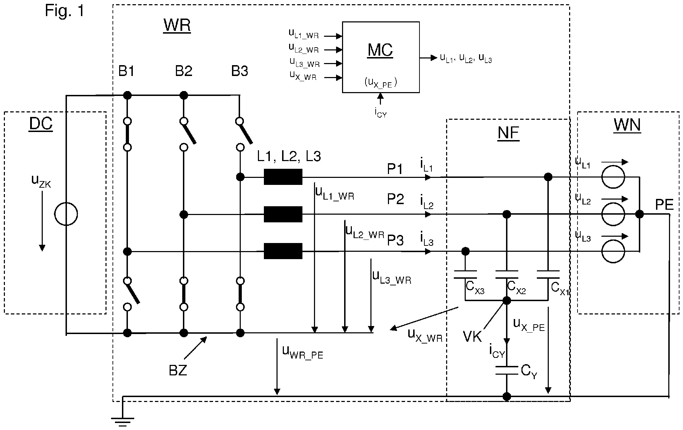

Die Figur 1 skizziert in stark vereinfachter Weise funktionswesentliche Komponenten eines erfindungsgemäßen Wechselrichters WR. Der Wechselrichter WR weist eine dreiphasige Brückenschaltung auf, die aus drei Brückenzweigen B1, B2, B3 besteht. Die dargestellten Schaltersymbole stehen vereinfachend für steuerbare Leistungshalbleiter, die über eine nicht im Detail dargestellte Schaltungsanordnung, zu der ein Mikrocontroller MC gehört, gesteuert werden. Es ist vorausgesetzt, dass der Mikrocontroller MC durch ebenfalls nicht dargestellte Messvorrichtungen, Spannungswerte an verschiedenen Schaltungspunkten des Wechselrichters WR, bezogen auf ein Bezugspotential BZ erfassen kann. Als Bezugspotential BZ dient hier eine Leitung des Zwischenkreises, in den die an den Gleichspannungseingang des Wechselrichters WR angeschlossene Gleichspannungsquelle DC die Zwischenkreisspannung $u_{ZK}$ einspeist.

Mit den Brückenzweigen B1, B2, B3 ist jeweils eine Wandlerinduktivität L1, L2, L3 verbunden, deren Ausgangleitungen die drei Phasenleiter P1, P2, P3 des Wechselrichters WR bilden, welche mit den drei Phasen eines Wechselspannungsnetzes WN verbindbar sind.

Ein weiterer Bestandteil des Wechselrichters WR ist ein Netzfilter NF, das aus einem Netzwerk mehrerer Kondensatoren besteht. Die Kondensatoren $C_{X1}$, $C_{X2}$, $C_{X3}$ sind mit jeweils einer der Phasenleiter P1, P2, P3 verbunden und weisen zudem einen gemeinsamen Verknüpfungspunkt VK auf. Ein weiterer Kondensator $C_Y$ verbindet den Verknüpfungspunkt VK mit dem Schutzleiter PE des Wechselspannungsnetzes WN.

Das zu lösenden Problem bestand darin, dass zur optimalen Steuerung des Wechselrichters WR, dem Mikrocontroller MC die Spannungen $u_{L1}$, $u_{L2}$, $u_{L3}$ der Phasenleiter P1, P2, P3 bezogen auf das Potential des Neutralleiters des Wechselspannungsnetzes WN bekannt sein müssen. Da der Neutralleiter nicht mit dem Wechselrichter WR verschaltet ist, steht dessen Bezugspotential jedoch nicht zur Verfügung. Der Schutzleiter PE weist zwar ebenfalls das Potential des Neutralleiters auf, darf aber aus Gründen der elektrischen Sicherheit nicht galvanisch mit Messeinrichtungen verbunden werden. Die folgenden Überlegungen sollen darlegen, wie bei der dargestellten Schaltungsanordnung die Spannungswerte $u_{L1}$, $u_{L2}$, $u_{L3}$ dennoch bestimmbar sind.

Das in der Figur 1 gezeigte Schaltbild soll hierzu zunächst die Spannungsverhältnisse verdeutlichen. Solange das Wechselspannungsnetz WN symmetrisch belastet ist, können die Spannungen $u_{L1}$, $u_{L2}$, $u_{L3}$ der Phasenleiter P1, P2, P3 bezogen auf das Neutralleiterpotential aus den Symmetriebedingungen des Wechselspannungsnetzes (Kirchhoffsche Knoten- und Maschenregeln)

$$\sum_{n=1}^{3} i_{Ln} = 0 \qquad \text{und} \qquad \sum_{n=1}^{3} u_{Ln} = 0$$

bestimmt werden. Da das Neutralleiterpotential nicht zur Verfügung steht, kann der Mikrocontroller MC die Netzspannungen lediglich gegen ein Bezugspotential BZ ermitteln; erfassbar sind somit die Spannungen $u_{L1\_WR}$, $u_{L2\_WR}$ und $u_{L3\_WR}$. Die Spannung $u_{WR\_PE}$ vom Bezugspotential BZ zum Potential des PE-Leiters darf aus den vorgenannten Gründen vom Wechselrichter WR nicht direkt gemessen werden. Gemäß der Maschenregel sind aus der Figur 1 folgende Zusammenhänge ablesbar:

$$u_{L1\_WR} = u_{L1} - u_{WR\_PE} \qquad u_{L2\_WR} = u_{L2} - u_{WR\_PE} \qquad u_{L3\_WR} = u_{L3} - u_{WR\_PE}$$

Die Addition dieser drei Gleichungen führt zu folgendem Ausdruck.

$$u_{L1\_WR} + u_{L2\_WR} + u_{L3\_WR} = \underbrace{u_{L1} + u_{L2} + u_{L3}}_{=0} - u_{WR\_PE} - u_{WR\_PE} - u_{WR\_PE}$$

Bei Annahme eines symmetrischen Wechselspannungsnetzes WN ist die Summe der ersten drei Summanden gleich Null. Aus dieser Gleichung folgt dann unmittelbar:

$$u_{WR\_PE} = -\frac{u_{L1\_WR} + u_{L2\_WR} + u_{L3\_WR}}{3}$$

Die Spannung $u_{WR\_PE}$ vom Bezugspotential BZ des Wechselrichters gegen PE kann also zu jedem Zeitpunkt als Mittelwert der drei Phasenspannungen $u_{L1\_WR}$, $u_{L2\_WR}$, $u_{L3\_WR}$ bezogen auf das Bezugspotential BZ bestimmt werden.

Da das Potential des Schutzleiters PE als identisch zum Potential des Neutralleiters vorausgesetzt werden kann, lassen sich die Netzspannungen $u_{L1}$, $u_{L2}$, $u_{L3}$ durch eine einfache Berechnung bestimmen:

$$u_{L1} = u_{L1\_WR} + u_{WR\_PE} \qquad u_{L2} = u_{L2\_WR} + u_{WR\_PE} \qquad u_{L3} = u_{L3\_WR} + u_{WR\_PE}$$

Alternativ kann auch das Potential des Verknüpfungspunktes VK im Netzfilter betrachtet werden. Im Falle eines symmetrischen Netzes ist die Spannung $u_{X\_PE}$ konstant gleich Null, das heißt, es fließt kein Ladestrom über den Kondensator $C_Y$. Dieses lässt sich leicht beweisen: unter Berücksichtigung, dass die Summe der Kondensatorströme

$$i_{Cx1} = C_{X1} \frac{d(u_{L1} - u_{X\_PE})}{dt} \qquad i_{Cx2} = C_{X2} \frac{d(u_{L2} - u_{X\_PE})}{dt} \qquad i_{Cx3} = C_{X3} \frac{d(u_{L3} - u_{X\_PE})}{dt}$$

im Verknüpfungspunkt VK gleich Null ist, folgt:

$$C_{X1} \frac{d(u_{L1} - u_{X\_PE})}{dt} + C_{X2} \frac{d(u_{L2} - u_{X\_PE})}{dt} + C_{X3} \frac{d(u_{L3} - u_{X\_PE})}{dt} = 0$$

Geht man weiterhin davon aus, dass die Kapazitäten der X-Kondensatoren $C_{X1}$, $C_{X2}$, $C_{X3}$ im Netzfilter NF gleich sind, dann lässt sich durch einfache Integration die Spannung $u_{X\_PE}$ isolieren.

$$\underbrace{u_{L1} + u_{L2} + u_{L3}}_{=0} - u_{X\_PE} - u_{X\_PE} - u_{X\_PE} = -3u_{X\_PE} = 0$$

Daraus folgt, dass $u_{X\_PE}$ auch Null ist. Wegen der Masche

$$u_{X\_WR} + u_{WR\_PE} = u_{X\_PE}$$

ist

$$u_{WR\_PE} = -u_{X\_WR}$$

Somit lassen sich die Netzspannungen wieder direkt bestimmen:

$$u_{L1} = u_{L1\_WR} - u_{X\_WR} \qquad u_{L2} = u_{L2\_WR} - u_{X\_WR} \qquad u_{L3} = u_{L3\_WR} - u_{X\_WR}$$

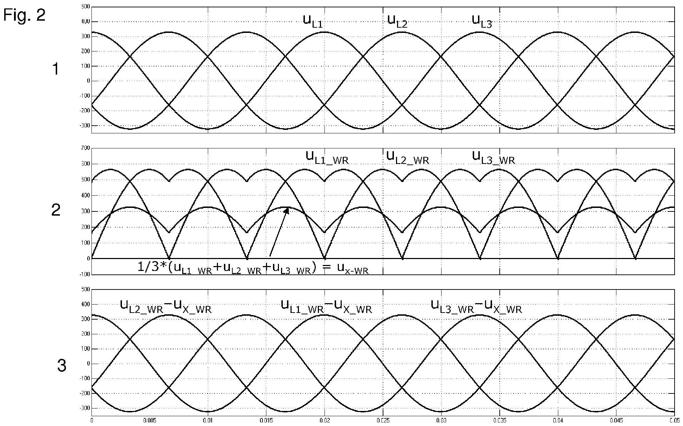

Zur Verdeutlichung der Zusammenhänge zeigt die Figur 2 einen Simulationsplot, in dem die Verläufe verschiedener Spannungen in einem symmetrischen Netz graphisch dargestllt sind. Der obere Plot 1 zeigt die Netzspannungen $u_{L1}$, $u_{L2}$, $u_{L3}$ direkt. Darunter sind im Plot 2 die Spannungen $u_{L1\_WR}$, $u_{L2\_WR}$, $u_{L3\_WR}$ dargestellt, wie sie von einem Mikrocontroller MC gegen das Bezugspotential BZ gemessen werden. Durch eine Mittelwertbildung der drei Spannungen $u_{L1\_WR}$, $u_{L2\_WR}$, $u_{L3\_WR}$ wird dann die Spannung $u_{X\_WR} = 1/3 * (u_{L1\_WR} + u_{L2\_WR} + u_{L3\_WR})$ bestimmt (mit Pfeil gekennzeichnet). Subtrahiert man diese Spannung $u_{X\_WR}$ wieder von den einzeln erfassten Netzspannungen $u_{L1\_WR}$, $u_{L2\_WR}$, $u_{L3\_WR}$ (Plot 3), dann entsprechen diese wieder den originalen Werten des oberen Plots 1.

Schwieriger wird die Situation, wenn die Netzspannungen nicht mehr symmetrisch sind, d. h. das die Summe der Augenblickswerte der Netzspannungen $u_{L1}$, $u_{L2}$, $u_{L3}$ nicht zu jedem Zeitpunkt Null ergibt. Für die Ströme $i_{L1}$, $i_{L2}$, $i_{L3}$ gilt nach wie vor die Symmetriebedingung, andernfalls würde der Wechselrichter WR einen Erdschluss aufweisen.

Durch die Unsymmetrie der Netzspannungen $u_{L1}$, $u_{L2}$, $u_{L3}$ ist dann auch die Spannung $u_{X\_PE}$ ungleich Null. Sie lässt sich dann durch Anwendung des Überlagerungssatzes bestimmen:

$$u_{X\_PE} = u_{L1} \frac{C_{X1}}{C_{X1} + C_{X2} + C_{X3}} + u_{L2} \frac{C_{X2}}{C_{X1} + C_{X2} + C_{X3}} + u_{L3} \frac{C_{X3}}{C_{X1} + C_{X2} + C_{X3}}$$

Wenn alle Kondensatoren gleich dimensioniert sind, was ist in Netzfiltern üblich ist, vereinfacht sich die obige Gleichung:

$$u_{X\_PE} = \frac{1}{3}(u_{L1} + u_{L2} + u_{L3})$$

Die Spannung $u_{X\_PE}$ liegt nun am Y-Kondensator Cy an und verursacht einen Strom $i_{CY}$. Da gegen den Schutzleiter PE keine galvanisch gekoppelten Messinstanzen geschaltet werden dürfen, soll die Spannung $u_{X\_PE}$ nun auf indirektem Wege erfasst werden. Dazu wird der Strom $i_{CY}$ mit einer geeigneten Messaufnahme auf der, zum Schutzleiter PE abgewandten Seite des Kondensators, erfasst. Mit dem Strom $i_{CY}$ lässt sich dann die Spannung am Kondensator und somit die gesuchte Spannung $u_{X\_PE}$ bestimmen.

Allgemein gilt:

$$i_{CY} = C_Y \frac{du_{X\_PE}}{dt}$$

Daraus folgt:

$$u_{X\_PE} = \frac{1}{C_Y} \int i_{CY} \, dt$$

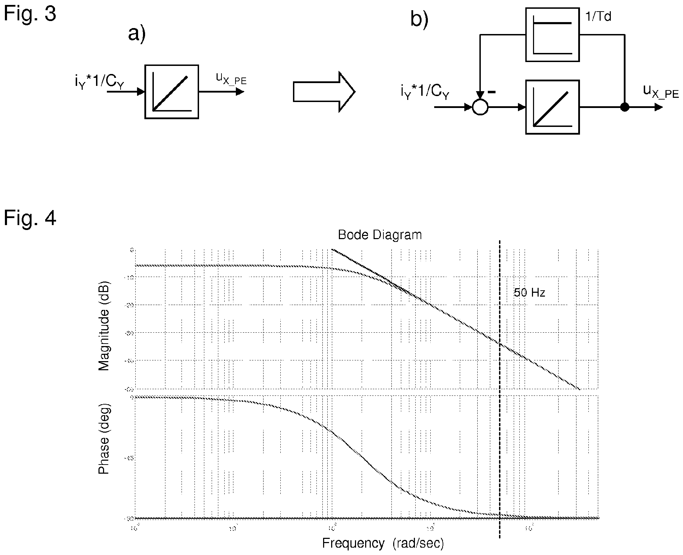

Eine reine Integration des Stromes (Figur 3a) führt dazu, dass Offsets der Messwerterfassung und einmalige Störungen nicht abklingen und sich aufsummieren. Eine solche Form der Integration ist technisch wenig sinnvoll. Statt dessen ist hier eine "bandbreitenbegrenzte" Integration vorteilhaft (Figur 3b). Dabei wird ein Teil des Ausgangswertes über eine Zeitkonstante Td zurück auf den Eingang gegeben. Ziel ist es, dass einmalige Ereignisse mit dieser Konstante abklingen, während die technisch interessanten Frequenzen normal aufintegriert werden. Die Integration kann entweder durch ein diskretes Integrationsglied oder besonders vorteilhaft direkt durch den Mikrocontroller MC erfolgen.

Das in der Figur 4 dargestellte Bodediagramm zeigt den Amplituden- und Phasenverlauf beider Übertragungsglieder bei (a) reiner Integration und (b) bandbreitenbegrenzter Integration mit einer Zeitkonstante von Td = 500ms. Das Bodediagramm verdeutlicht, dass im technisch interessanten Frequenzbereich um die 50 Hz herum beide Übertragungsglieder das gleiche Ergebnis liefern. Der Vorteil der bandbreitenbegrenzten Integration ist jedoch, dass Einmalereignisse und Offsets der Messeinrichtung mit der Zeitkonstante Td abklingen. Damit lassen sich die Spannungen wie folgt berechnen:

$$u_{L1} = u_{L1\_WR} - u_{X\_WR} + u_{X\_PE}$$

$$u_{L2} = u_{L2\_WR} - u_{X\_WR} + u_{X\_PE}$$

$$u_{L3} = u_{L3\_WR} - u_{X\_WR} + u_{X\_PE}$$

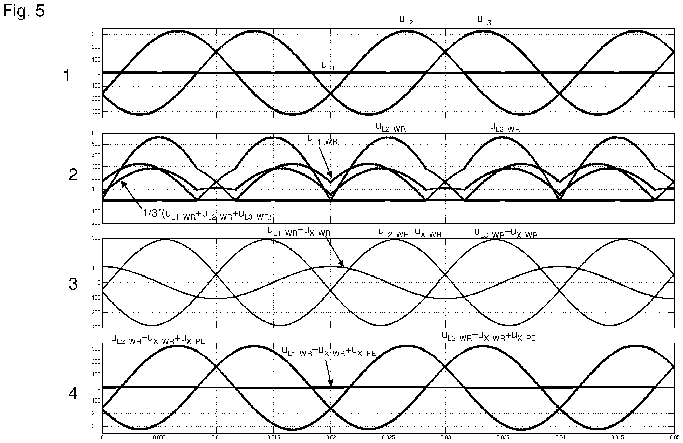

Der Simulationsplot in der Figur 5 soll die Wirkungsweise verdeutlichen. Der obere Plot 1 zeigt die drei Netzspannungen, wobei $u_{L1}$ jetzt Null ist. Damit ist das Netz unsymmetrisch. Plot 2 stellt die Spannungen dar, wie sie von Mikrocontroller gegen das Massepotential des Zwischenkreises gemessen werden. Plot 3 zeigt nun die vom Mikrocontroller MC errechneten Netzspannungen $u_{L1\_WR}$ - $u_{X\_WR}$, $u_{L2\_WR}$ - $u_{X\_WR}$, $u_{L3\_WR}$ - $u_{X\_WR}$, berechnet nach dem zuvor hergeleiteten Algorithmus für ein symmetrisches Netz. Sie stimmen nicht mit den realen Netzspannungen $u_{L1}$, $u_{L2}$, $u_{L3}$ überein. Die berechnete Phasenspannung von $u_{L1}$ wird nicht als Null erkannt und die berechneten Spannungen zu $u_{L2}$ und $u_{L3}$ stimmen weder in Amplitude noch in der Phasenlage überein. Die Ursache dafür ist, dass das Potential des Zwischenkreises gegenüber dem Schutzleiter PE nun einen netzfrequenten Spannungshub aufweist.

Erst durch Einbeziehung der Spannung $u_{X\_PE}$, die indirekt über den Kondensatorstrom von Cy ermittelt worden ist, kann der Mikrocontroller MC die realen Netzspannungen $u_{L1}$, $u_{L2}$, $u_{L3}$ wieder vollständig rekonstruieren. Diese sind in Plot 4 dargestellt.

Wenn die X-Kondensatoren $C_{X1}$, $C_{X2}$, $G_{X3}$ im Netzfilter NF gleich dimensioniert sind, dann ist eine Messung der Spannung $u_{X\_WR}$ nicht notwendig. Es gilt dann, wie bereits hergeleitet, die Gleichung für die Berechnung von $u_{X\_PE}$:

$$u_{X\_PE} = \frac{1}{3} \left( u_{L1} + u_{L2} + u_{L3} \right)$$

Aus der Schaltskizze der Figur 1 lässt sich durch Ablaufen der eingangsseitigen Spannungsmasche weiterhin ablesen:

$$u_{X\_PE} = u_{X\_WR} + u_{WR\_PE}$$

Die Summe aller drei vom Mikrocontroller MC gemessenen Spannungen beträgt:

$$u_{L1\_WR} + u_{L2\_WR} + u_{L3\_WR} = u_{L1} + u_{L2} + u_{L3} - u_{WR\_PE} - u_{WR\_PE} - u_{WR\_PE}$$

Nach der Multiplikation mit 1/3 folgt:

5

$$\frac{1}{3}\left(u_{L1\_WR} + u_{L2\_WR} + u_{L3\_WR}\right) = \underbrace{\frac{u_{L1} + u_{L2} + u_{L3}}{3}}_{u_{X\_PE}} - u_{WR\_PE} = u_{X\_PE} - u_{WR\_PE}$$

Ersetzt man nun $u_{X\_PE}$ mit dem Ausdruck der eingangsseitigen Masche, dann kommt man auf die folgende Gleichung:

$$\frac{1}{3}\left(u_{L1\_WR} + u_{L2\_WR} + u_{L3\_WR}\right) = u_{X\_PE} - u_{WR\_PE} = u_{X\_WR} + u_{WR\_PE} - u_{WR\_PE}$$

$$u_{X\_WR} = \frac{1}{3}\left(u_{L1\_WR} + u_{L2\_WR} + u_{L3\_WR}\right) \qquad \text{q. e. d.}$$

Damit ist der Beweis geführt, dass auch bei einem unsymmetrischen Netz die Spannung $u_{X\_WR}$ nicht direkt gemessen werden muss. Voraussetzung ist allerdings, dass die X-Kondensatoren $C_{X1}$, $C_{X2}$, $C_{X3}$ im Netzfilter NF identische Werte aufweisen. Sollte das nicht der Fall sein, so muss die Spannung $u_{X\_WR}$ vom Mikrocontroller MC mit gemessen werden.

**Bezugszeichen**

| | |
|---|---|
| B1, B2, B3 | Brückenzweige |
| BZ | Bezugspotential |
| $C_{X1}$, $C_{X2}$, $C_{X3}$, $C_Y$ | Kondensatoren |
| DC | Gleichspannungsquelle |
| L1, L2, L3 | Wandlerinduktivitäten |
| MC | Mikrocontroller |
| NF | Netzfilter |
| P1, P2, P3 | Phasenleiter |
| PE | Schutzleiter |
| Td | Zeitkonstante |
| VK | Verknüpfungspunkt |
| WN | Wechselspannungsnetz |
| WR | Wechselrichter |

| | |
|---|---|
| $i_{CY}$ | Strom (Ladestrom des Kondensators $C_Y$) |
| $i_{L1}$, $i_{L2}$, $i_{L3}$ | Ströme (durch die Phasenleiter P1, P2, P3) |
| $u_{L1}$, $u_{L2}$, $u_{L3}$ | Spannungen der Phasenleiter P1, P2, P3 gegen den Neutralleiter (Netzspannungen) |
| $u_{L1\_WR}$, $u_{L2\_WR}$, $u_{L3\_WR}$ | Spannungen der Phasenleiter P1, P2, P3 gegen das Bezugspotential BZ |
| $u_{X\_WR}$ | Spannung des Verknüpfungspunkts VK gegen das Bezugspotential BZ |
| $u_{X\_PE}$ | Spannung des Verknüpfungspunkts VK gegen den Schutzleiter PE |
| $u_{WR\_PE}$ | Spannung zwischen dem Bezugspotential BZ und dem Schutzleiter PE |
| $u_{ZK}$ | Zwischenkreisspannung |

**Patentansprüche**

1.  Wechselrichter, der mindestens einen Gleichspannungseingang für mindestens eine Gleichspannungsquelle aufweist, und der eine dreiphasige Brückenschaltung aufweist, deren ausgangsseitige Phasenleiter mit einem dreiphasigen Wechselspannungsnetz verbindbar sind, wobei der Wechselrichter keine Verbindung zum Neutralleiter des Wechselspannungsnetzes herstellt, oder besitzt, wobei mit den Phasenleitern jeweils ein Kondensator verbunden ist, und die Kondensatoren einen gemeinsamen Verknüpfungspunkt aufweisen,
    **dadurch gekennzeichnet,**
    **dass** der Wechselrichter (WR) einen Mikrocontroller (MC) aufweist, der die Spannungen ($u_{L1\_WR}$, $u_{L2\_WR}$, $u_{L3\_WR}$)

der Phasenleiter (P1, P2, P3) gegen ein internes Bezugspotential (BZ) erfasst

**dass** der Mikrocontroller (MC) die Spannung ($u_{X\_WR}$) am Verknüpfungspunkt (VK) der Kondensatoren ($C_{X1}$, $C_{X2}$, $C_{X3}$) gegen das interne Bezugspotential (BZ) durch eine Spannungsmessung erfasst oder aus den erfassten Spannungen ($u_{L1\_WR}$, $u_{L2\_WR}$, $u_{L3\_WR}$) der Phasenleiter gegen das interne Bezugspotential berechnet, und

**dass** der Mikrocontroller (MC) aus den erfassten Spannungen ($u_{L1\_WR}$, $u_{L2\_WR}$, $u_{L3\_WR}$, $u_{X\_WR}$) der Phasenleiter gegen das interne Bezugspotential die Spannungen ($u_{L1}$, $u_{L2}$, $u_{L3}$) der Phasenleiter (P1, P2, P3) gegen das Potential des Neutralleiters berechnet.

2.  Wechselrichter nach Anspruch 1, **dadurch gekennzeichnet, dass** die Kondensatoren ($C_{X1}$, $C_{X2}$, $C_{X3}$) gleich dimensioniert sind und der Mikrocontroller (MC) die Spannung ($u_{X\_WR}$) am Verknüpfungspunkt (VK) der Kondensatoren ($C_{X1}$, $C_{X2}$, $C_{X3}$) gegen das interne Bezugspotential (BZ) durch eine Mittelwertbildung

$$u_{X\_WR} = \frac{1}{3}\left(u_{L1\_WR} + u_{L2\_WR} + u_{L3\_WR}\right)$$

aus den erfassten Spannungen ($u_{L1\_WR}$, $u_{L2\_WR}$, $u_{L3\_WR}$) der Phasenleiter (P1, P2, P3) gegen das interne Bezugspotential (BZ) berechnet.

3.  Wechselrichter nach Anspruch 1, **dadurch gekennzeichnet, dass** der Verknüpfungspunkt (VK) über einen weiteren Kondensator ($C_Y$) mit dem Schutzleiter (PE) des Wechselspannungsnetzes (WN) verbunden ist und dass der Mikrocontroller (MC) den Ladestrom ($i_{CY}$) dieses Kondensators ($C_Y$) erfasst.

4.  Wechselrichter nach Anspruch 1, **dadurch gekennzeichnet, dass** das Bezugspotential (BZ) ein Potential des Wechselrichterzwischenkreises ist.

5.  Wechselrichter nach Anspruch 1 oder Anspruch 4, **dadurch gekennzeichnet, dass** das die miteinander verschalteten Kondensatoren ($C_{X1}$, $C_{X2}$, $C_{X3}$, $C_Y$) ein Netzfilter (NF) ausbilden.

6.  Wechselrichter nach Anspruch 1, **dadurch gekennzeichnet, dass** der Mikrocontroller (MC) im Falle eines symmetrisch belasteten Wechselspannungsnetzes WN die Spannungen ($u_{L1}$, $u_{L2}$, $u_{L3}$) der Phasenleiter gegen das Potential des Neutralleiters über folgende Zusammenhänge berechnet:

$$u_{L1} = u_{L1\_WR} - u_{X\_WR}$$

$$u_{L2} = u_{L2\_WR} - u_{X\_WR}$$

$$u_{L3} = u_{L3\_WR} - u_{X\_WR}.$$

7.  Wechselrichter nach Anspruch 3, **dadurch gekennzeichnet, dass** der Mikrocontroller (MC) im Falle eines nicht symmetrisch belasteten Wechselspannungsnetzes WN die Spannungen ($u_{L1}$, $u_{L2}$, $u_{L3}$) der Phasenleiter gegen das Potential des Neutralleiters über folgende Zusammenhänge berechnet:

$$u_{L1} = u_{L1\_WR} - u_{X\_WR} + u_{X\_PE}$$

$$u_{L2} = u_{L2\_WR} - u_{X\_WR} + u_{X\_PE}$$

$$u_{L3} = u_{L3\_WR} - u_{X\_WR} + u_{X\_PE}$$

wobei $U_{X\_PE}$ die am Kondensator ($C_Y$) anliegende Spannung ist, die der Mikrocontroller (MC) durch eine Integration des Ladestrom ($i_{CY}$) des Kondensators ($C_Y$) bestimmt.

8. Wechselrichter nach Anspruch 7, **dadurch gekennzeichnet, dass** die Integration des Ladestroms ($i_{cy}$) des Kondensators ($C_y$) bandbreitenbegrenzt erfolgt.

9. Wechselrichter nach Anspruch 1, **dadurch gekennzeichnet, dass** der Wechselrichter (WR) Bestandteil einer Photovoltaikanlage ist.

**Claims**

1. Inverter having at least one direct voltage input for at least one direct voltage source and having a three-phase bridge circuit whose phase conductors on the output side can be connected to a three-phase alternating voltage grid, whereby the inverter does not establish or possess any connection to the neutral conductor of the alternating voltage grid,
whereby a respective capacitor is connected to each of the phase conductors and the capacitors have a common connection point,
**characterised in that**
the inverter (WR) has a microcontroller (MC) which records the voltages ($U_{L1\_WR}$, $U_{L2\_WR}$, $U_{L3\_WR}$) of the phase conductors (P1, P2, P3) relative to an internal reference potential (BZ),
that the microcontroller (MC) records the voltage ($U_{X\_WR}$) at the connection point (VK) of the capacitors ($C_{X1}$, $C_{X2}$, $C_{X3}$) relative to the internal reference potential (BZ) by way of a voltage measurement, or calculates it based on the recorded voltages ($U_{L1\_WR}$, $U_{L2\_WR}$, $U_{L3\_WR}$) of the phase conductors relative to the internal reference potential, and that the microcontroller (MC) calculates the voltages ($U_{L1}$, $U_{L2}$, $U_{L3}$) of the phase conductors (P1, P2, P3) relative to the potential of the neutral conductor based on the recorded voltages $U_{L1\_WR}$, $U_{L2\_WR}$, $U_{L3\_WR}$, $U_{X\_WR}$) of the phase conductors relative to the internal reference potential.

2. Inverter according to Claim 1, **characterised in that** the capacitors ($C_{X1}$, $C_{X2}$, $C_{X3}$) are equally dimensioned and the microcontroller (MC) calculates the voltage ($U_{X\_WR}$) at the connection point (VK) of the capacitors ($C_{X1}$, $C_{X2}$, $C_{X3}$) relative to the internal reference potential (BZ) by an averaging process

$$u_{X\_WR} = \frac{1}{3}\left(u_{L1\_WR} + u_{L2\_WR} + u_{L3\_WR}\right)$$

based on the recorded voltages ($U_{L1\_WR}$, $U_{L2\_WR}$, $U_{L3\_WR}$) of the phase conductors (P1, P2, P3) relative to the internal reference potential (BZ).

3. Inverter according to Claim 1, **characterised in that** the connection point (VK) is connected via a further capacitor ($C_Y$) to the protective conductor (PE) of the alternating voltage grid (WN) and that the microcontroller (MC) records the charging current ($i_{CY}$) of this capacitor ($C_Y$).

4. Inverter according to Claim 1, **characterised in that** the reference potential (BZ) is a potential of the inverter intermediate circuit.

5. Inverter according to Claim 1 or Claim 4, **characterised in that** the interconnected capacitors ($C_{X1}$, $C_{X2}$, $C_{X3}$, $C_Y$) form a mains filter (NF).

6. Inverter according to Claim 1, **characterised in that**, in the case of a symmetrically loaded alternating voltage grid WN, the microcontroller (MC) calculates the voltages ($U_{L1}$, $U_{L2}$, $U_{L3}$) of the phase conductors relative to the potential of the neutral conductor by way of the following correlations:

$$u_{L1} = u_{L1\_WR} - u_{X\_WR}$$

$$u_{L2} = u_{L2\_WR} - u_{X\_WR}$$

$$u_{L3} = u_{L3\_WR} - u_{X\_WR}.$$

7. Inverter according to Claim 3, **characterised in that**, in the case of a non-symmetrically loaded alternating voltage grid WN, the microcontroller (MC) calculates the voltages ($U_{L1}$, $U_{L2}$, $U_{L3}$) of the phase conductors relative to the potential of the neutral conductor by way of the following correlations:

$$u_{L1} = u_{L1\_WR} - u_{X\_WR} + u_{X\_PE}$$

$$u_{L2} = u_{L2\_WR} - u_{X\_WR} + u_{X\_PE}$$

$$u_{L3} = u_{L3\_WR} - u_{X\_WR} + u_{X\_PE}$$

whereby $U_{X\_PE}$ is the voltage applied to the capacitor ($C_Y$) and determined by the microcontroller (MC) by way of integrating the charging current ($i_{CY}$) of the capacitor ($C_Y$).

8. Inverter according to Claim 7, **characterised in that** the integration of the charging current ($i_{CY}$) of the capacitor is carried out in a band width-limited manner.

9. Inverter according to Claim 1, **characterised in that** the inverter (WR) is an element of a photovoltaic system.

**Revendications**

1. Onduleur qui comprend au moins une entrée de tension continue pour au moins une source de tension continue et qui comprend un circuit en pont triphasé, dont les conducteurs de phase, côté sortie, peuvent être mis en liaison avec un réseau de tension alternative triphasé, sachant que l'onduleur n'établit ni ne possède une liaison au conducteur neutre du réseau de tension alternative,
sachant qu'à chacun des conducteurs de phase est relié un condensateur, et que les condensateurs présentent un point de liaison commun,
**caractérisé en ce que**
l'onduleur (WR) présente un microcontrôleur (MC), qui saisit la tension ($u_{L1\_WR}$, $u_{L2\_WR}$, $u_{L3\_WR}$) des conducteurs de phase (P1, P2, P3) en relation avec un potentiel de référence interne (BZ),
le microcontrôleur (MC) saisit la tension ($u_{X\_WR}$) au point de liaison (VK) des condensateurs ($C_{X1}$, $C_{X2}$, $C_{X3}$) en relation avec le potentiel de référence interne (BZ) par une mesure de tension ou la calcule à partir des valeurs de tensions ($u_{L1\_WR}$, $u_{L2\_WR}$, $u_{L3\_WR}$) saisies, et
le microcontrôleur (MC) calcule les tensions ($u_{L1}$, $u_{L2}$, $u_{L3}$) des conducteurs de phase (P1, P2, P3) en relation avec le potentiel du conducteur neutre, à partir des tensions ($u_{L1\_WR}$, $u_{L2\_WR}$, $u_{L3\_WR}$, $u_{X\_WR}$).

2. Onduleur selon la revendication 1, **caractérisé en ce que**, **caractérisé en ce que** les condensateurs ($C_{X1}$, $C_{X2}$, $C_{X3}$) sont dimensionnés de manière identique et que le microcontrôleur (MC) calcule la tension ($U_{X\_WR}$), au point de liaison (VK) des condensateurs ($C_{X1}$, $C_{X2}$, $C_{X3}$) en relation avec le potentiel de référence interne (BZ) par la formation d'une valeur moyenne

$$u_{X\_WR} = \frac{1}{3}\left(u_{L1\_WR} + u_{L2\_WR} + u_{L3\_WR}\right)$$

à partir des tensions saisies ($u_{L1\_WR}$, $u_{L2\_WR}$, $u_{L3\_WR}$) des conducteurs de phase (P1, P2, P3) en relation avec le potentiel de référence interne (BZ).

3. Onduleur selon la revendication 1, **caractérisé en ce que** le point de liaison (VK) est en liaison avec le conducteur de protection (PE) du réseau de tension alternative (WN) par l'intermédiaire d'un autre condensateur ($C_Y$) et que le microcontrôleur (MC) saisit le courant de charge ($i_{cy}$) de ce condensateur ($C_Y$).

**4.** Onduleur selon la revendication 1, **caractérisé en ce que** le potentiel de référence (BZ) est un potentiel du circuit intermédiaire de l'onduleur.

**5.** Onduleur selon la revendication 1 ou la revendication 4, **caractérisé en ce que** les condensateurs ($C_{X1}$, $C_{X2}$, $C_{X3}$, $C_Y$), connectés les uns avec les autres, forme un filtre de réseau (NF).

**6.** Onduleur selon la revendication 1, **caractérisé en ce que** le microcontrôleur (MC), dans un cas de surcharge symétrique du réseau de tension alternative WN, calcule les tensions ($u_{L1}$, $u_{L2}$, $u_{L3}$) des conducteurs de phase en relation avec le potentiel du conducteur neutre, par le biais des relations suivantes

$$u_{L1} = u_{L1\_WR} - u_{X\_WR}$$

$$u_{L2} = u_{L2\_WR} - u_{X\_WR}$$

$$u_{L3} = u_{L3\_WR} - u_{X\_WR}.$$

**7.** Onduleur selon la revendication 3, **caractérisé en ce que** le microcontrôleur (MC), dans un cas de surcharge non symétrique du réseau de tension alternative WN, calcule les tensions ($u_{L1}$, $u_{L2}$, $u_{L3}$) des conducteurs de phase en relation avec le potentiel du conducteur neutre, par le biais des relations suivantes :

$$(u_{L1}, u_{L2}, u_{L3})$$

$$u_{L1} = u_{L1\_WR} - u_{X\_WR} + u_{X\_PE}$$

$$u_{L2} = u_{L2\_WR} - u_{X\_WR} + u_{X\_PE}$$

$$u_{L3} = u_{L3\_WR} - u_{X\_WR} + u_{X\_PE}$$

sachant que $U_{X\_PE}$. est la tension appliquée sur le condensateur ($C_Y$), que le microcontrôleur (MC) détermine par une intégration du courant de charge ($i_{cy}$) du condensateur ($C_Y$).

**8.** Onduleur selon la revendication 7, **caractérisé en ce que** l'intégration du courant de charge ($i_{cy}$) du condensateur ($C_Y$) est effectué limitant la largeur de bande.

**9.** Onduleur selon la revendication 1, **caractérisé en ce que** l'onduleur(WR) fait partie d'une installation photovoltaïque

Fig. 1

Fig. 2

**Fig. 3**

a)

$i_Y*1/C_Y \longrightarrow \boxed{} \longrightarrow u_{X\_PE}$

b)

$i_Y*1/C_Y \longrightarrow \bigcirc^{-} \longrightarrow \boxed{} \longrightarrow u_{X\_PE}$

1/Td

**Fig. 4**

Bode Diagram

Magnitude (dB)

Phase (deg)

50 Hz

Frequency (rad/sec)

Fig. 5

**IN DER BESCHREIBUNG AUFGEFÜHRTE DOKUMENTE**

**In der Beschreibung aufgeführte Patentdokumente**

- EP 2107672 A1